(19) Europäisches Patentamt
European Patent Office
Office européen des brevets

(11) EP 2 804 844 B1

(12) EUROPEAN PATENT SPECIFICATION

(45) Date of publication and mention
of the grant of the patent:
**06.11.2019 Bulletin 2019/45**

(21) Application number: **12772352.6**

(22) Date of filing: **14.09.2012**

(51) Int Cl.:
**C03C 21/00** *(2006.01)*     **C03C 23/00** *(2006.01)*

(86) International application number:
**PCT/GB2012/000717**

(87) International publication number:
**WO 2013/107996 (25.07.2013 Gazette 2013/30)**

(54) **PRODUCTION OF METALIZED PRODUCT**

VERFAHREN ZUR HERSTELLUNG VON METALLISIERTES PRODUKT

PROCÉDÉ DE PRODUCTION DE PRODUIT MÉTALLISÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.01.2012 GB 201200890**

(43) Date of publication of application:
**26.11.2014 Bulletin 2014/48**

(73) Proprietor: **The University of Dundee**
**Dundee DD1 4HN (GB)**

(72) Inventors:
• **ABDOLVAND, Amin**
  **Dundee DD1 4HN (GB)**
• **WACKEROW, Stephan**
  **Dundee DD1 4HN (GB)**

(74) Representative: **Gordon, Naoise Padhraic Edward**
**Black & Associates Limited**
**Office 2/1**
**211 Dumbarton Road**
**Glasgow G11 6AA (GB)**

(56) References cited:
**EP-A1- 1 051 365     DE-A1- 19 841 547**

• **STEFAN WACKEROW ET AL: "Homogenous silver-doped nanocomposite glass", OPTICAL MATERIALS EXPRESS, vol. 1, no. 7, 12 October 2011 (2011-10-12), pages 1224-1231, XP055048871,**
• **STEFAN WACKEROW ET AL: "Laser-assisted one-step fabrication of homogeneous glass-silver composite", APPLIED PHYSICS A; MATERIALS SCIENCE & PROCESSING, SPRINGER, BERLIN, DE, vol. 109, no. 1, 26 July 2012 (2012-07-26) , pages 45-49, XP035117134, ISSN: 1432-0630, DOI: 10.1007/S00339-012-7088-Y**

## Description

## Introduction

The present invention relates to a method for metalizing a substrate.

## Background

Glasses and other dielectrics containing metal nanoparticles are of interest due to their unique linear and nonlinear optical properties. These properties are dominated by the strong surface plasmon resonances (SPRs) of the metal nanoparticles. The spectral position and shape of these SPRs can be designed within a wide spectral range throughout the visible and near infrared spectra regions of the electromagnetic spectrum by selection of the metal and the dielectric matrix or by manipulation of the size, shape and spatial distribution of the metal clusters. Therefore, these compound materials are promising candidates for many applications in the field of photonics.

Glass with embedded nanoparticles has traditionally been fabricated using chemical ion-exchange techniques. These processes have been the subject of basic and applied research for the potential exploitation of new dopants in the preparation of passive and active glasses. In the process metal dopants are usually introduced into the glass by immersing the matrix in a molten salt bath containing the dopant ions. For instance, soda-lime float glass (72.2 SiO2, 14.2 Na2O, 0.71 K2O, 6.5 CaO, 4.42 MgO, 1.49 $Al_2O_3$, 0.13 $Fe_2O_3$, 0.4 $SO_3$, in wt.%) is a preferred substrate for the $Ag^+$-$Na^+$ ion-exchange process.

For the ion-exchange process, a glass substrate is placed in a mixed melt of $AgNO_3$ and $KNO_3$ (or $AgNO_3$ and $NaNO_3$) at 400 °C. The metallic ions are driven into the glass due to the chemical potential gradient and they replace alkali ions of the matrix that are released into the melt. In this way, metal concentration values well beyond the solubility limits may be achieved without clustering. The thickness of the glass substrate, time of the ion-exchange process, and weight concentration of $AgNO_3$ in the melt determine the concentration and distribution of $Ag^+$ ions in the glass.

Thermal annealing of the ion-exchanged glass in a $H_2$ reduction atmosphere (or air), typically at 400-650 °C (depending on the process), then results in the reduction of silver ions and formation of spherical silver nanoparticles. For glass containing iron ions ($Fe^{2+}$ and $Fe^{3+}$), and for annealing in a non-reducing atmosphere (air) the following two thermo-reducing reactions have been considered:

a) $Fe^{2+} \rightarrow Fe^{3+} + e^-$
and b) $Ag^+ + e^- \rightarrow Ag^0$.

Thermal-assisted ion exchange has proven to be an ineffective technique when dealing with multivalent ion species, as is the case of cobalt and gold. Multivalent ions come to substitute mono valent alkali ions (mostly Na) of the matrix, requiring structural modifications that come to depend crucially on the local composition of the glass.

Recently, dry fabrication of silver nanocomposites glasses using solid-state field-assisted diffusion process and post-annealing were reported by:

Y. Ma, et al in, "Preparation of Ag nanocrystals embedded silicate glass by field-assisted diffusion and its properties of optical absorption," Solid State Sci. 12(8), 1413-1418 (2010); and
J. Sancho-Parramon, et al, "Optical and structural properties of silver nanoparticles in glass matrix formed by thermal annealing of field assisted film dissolution," Opt. Mater. 32(4), 510-514 (2010).

In both cases, the authors successfully produced silver nanocrystals embedded in glass. However, these techniques produce clusters (islands) of inhomogeneously distributed nanoparticles.

Further processing of silver ion exchange glasses using laser or electron beam or X-Ray energy is reported in a number of publications. For example, Blondeau et al. in, "Influence of Pulsed Laser Irradiation on Precipitation of Silver Nanoparticles in Glass" in Journal of Crystal Growth 311 (2008) 172-184 which reports that the irradiation of the glass samples by the laser pulse promotes precipitation of the nanoparticles in a multiphoton process and the formation of nanoaggregates.

A number of similar publications on the processing of glass containing metallic ions using laser or electron sources all led to the formation of metallic nanoparticles.

Stefan Wackerow et al, "Homogenous silver-doped nanocomposite glass", OPTICAL MATERIALS EXPRESS, vol. 1, no. 7, 12 October 2011 (2011-1 o-1 2), pages 1224-1231, XP055048871, describes the creation of a silver doped nanocomposite glass by driving silver ions into the glass by electric field-assisted ion exchange to create an as-diffused substrate. Subsequent annealing in air creates a silver nanoparticle layer beneath the surface of the glass. The post-annealing step comprises, heating the sample in air for 48 hours at 550 °C which causes a change of colour

EP 1 051 365 41 (LPKF LASER & ELECTRONICS AG [DE]) 15 November 2000 (2000-11-15) Kickelhain and equivalent (US6596966B1) (hereinafter referred to as D2) describes marking a thin plate of ordinary BK 7 glass by irradiating it with a 355 nm high fluence Nd-YAG laser with a relatively long pulse length of 100ns. In order to mark glass in the focus area of a laser beam, a certain energy density threshold must be exceeded. This energy density threshold is very sharp, so that an abrupt transition occurs from linear absorption to the nonlinear absorption which causes an alteration in the glass to take place beyond the actual range of focus of the laser radiation. Spreading out of the mark means that marks are larger than desired and must be spaced a certain minimum distance from the surface of the glass body. Accordingly, high laser power on transparent glass causes inaccuracy and smudging of the markings created.

DE 198 41 547 A1 (Univ Halle Wittenberg {DE} 23 March 2000 (2000-03-23) describes a method for producing coloured volumes within a glass substrate by using a laser to locally heat and reduce metal ions. It is acknowledged that heating will cause expansion of the coloured volume and a number of methods are suggested to ensure that heating is localised. For example, the laser may be only weakly absorbed by the glass, save at the focal point of the laser (paragraph 15) or multiple intersecting laser beams may be used to raise the intersection point to a sufficient temperature (paragraph 16) for the duration of the laser. However, in all cases, the objective is to locally raise the glass temperature above its glass transition point Tg.

**Summary of the Invention**

In accordance with a first aspect of the invention there is provided a method for metalizing a substrate, the method comprising the steps of:

creating an as-diffused substrate which is suitable for metalization by:

heating and applying a voltage across an ion exchange substrate to embed metallic ions from a metallic layer within the ion exchange substrate by a process of ion exchange to create an as-diffused substrate in which the metallic ions are distributed homogeneously across the substrate; and metalizing the as-diffused substrate by:
applying a pulsed laser beam to a surface of the as-diffused substrate at or near a concentration of metallic ions such that the energy of the laser causes the conversion of the metallic ions in the as-diffused substrate into metal atoms at or near the point at which the laser pulse is incident upon the as-diffused substrate thereby creating a metalized substrate with a surface pattern defined by the movement of the laser beam across the surface of the as-diffused substrate.

Preferably, the method further comprises creating the ion exchange substrate by annealing a substrate having a suitable concentration of alkali ions and a metallic layer on a surface thereof.

Preferably, the metal atoms are contained in a mixed or percolated metal-dielectric layer.

Preferably, the step of annealing occurs at between 250°C and 350°C.

Preferably, the step of heating the ion exchange substrate occurs at a temperature of between 100°C and 350 °C.

Preferably, the applied voltage is between 10V and 2 kV.

Preferably, the process further comprises introducing a conducting layer between the negative electrode and the substrate to improve the electrical contact between them.

Preferably, the process further comprises introducing a receiving layer which captures ion exchange material removed from the substrate during the ion exchange process.

Preferably, the conducting layer is highly planar and malleable such that it fills voids which would otherwise exist between the relatively uneven surface of the glass substrate and the electrode.

Preferably, the conducting layer and the receiving layer comprise a graphite layer.

Preferably, the substrate comprises a soda lime glass.

Preferably, the metallic layer comprises ions of silver.

Preferably, the pulsed laser is a nanosecond or picosecond pulse laser.

Preferably, the pulsed laser operates at wavelengths from 355 nm to 1064 nm.

Preferably, the pulsed laser has an energy fluence up to a 5 J/cm$^2$.

**Brief Description of the Drawings**

The present invention will now be described by way of example only, with reference to the accompanying drawings in which:

Figure 1 is an example of a process for the creation of an as-diffused substrate and for the subsequent metallization of the as-diffused substrate;

Figure 2 is an example of an apparatus suitable for making an as-diffused substrate;

Figure 3 is a graph of current Vs time during field assisted diffusion as shown in figure 2;

Figure 4 is an illustration of a cross section of a particle containing layer after post annealing;

Figure 5 is a graph showing absorbance spectra for a sample made in accordance with the present invention;

Figure 6 is an illustration of an apparatus suitable for metallization of an as-diffused substrate;

Figure 7a is an image of a silver-ion doped glass annealed in air, figure 7b shows an image of a thin slice of the cross section of the sample, figure 7c shows a metalized substrate in accordance with the present invention which is a glass-silver composite;

Figure 8 is a graph of absorbance Vs wavelength for a variety of samples;

Figure 9a is a series of microscope images of the slices, figure 9b is a series of absorbance spectra for the slices; and

Figure 10a to 10d show scanning electron microscope images of a glass-silver composite in accordance with the present invention.

## Detailed Description of the Drawings

The present invention provides methods for the creation of an as-diffused material in which ions of a metallic element are exchanged into an ion exchange substrate in place of alkali ions contained in the substrate in a dry fabrication technique which involves a solid state field assisted diffusion process. The present invention further processes the as-diffused material to create a metallized layer at or near the surface of the substrate. In another embodiment of the invention, the as diffused substrate is annealed to create a substrate which has nano-particle clusters.

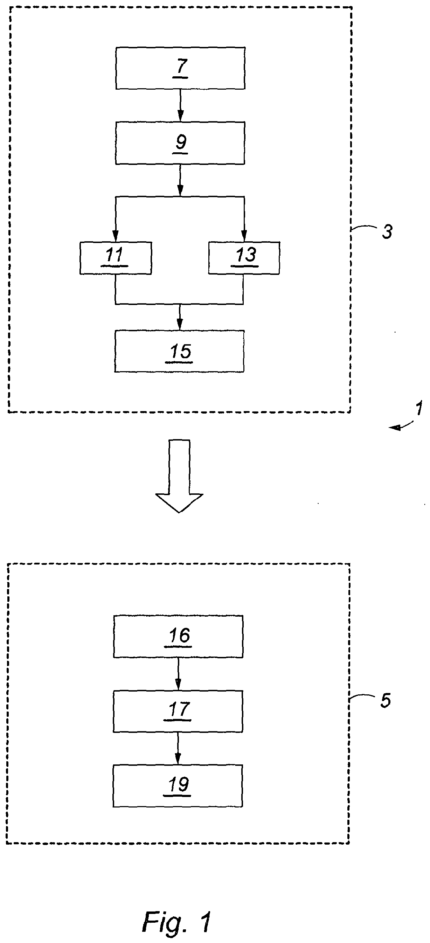

Figure 1 shows an embodiment of the method of the present invention 1 with the following steps. As is apparent from figure 1, the method may be separated into a first stage 3 wherein the as-diffused substrate is prepared and a second stage 5, wherein the as-diffused substrate is metallized.

In the first stage, an ion exchange substrate is created by providing a substrate 7 having a suitable concentration of alkali ions and a metallic layer on a surface of the substrate. The substrate is then annealed 9 in order to create an ion exchange substrate. The ion exchange substrate is placed between the positive and negative electrodes of an electric circuit inside an oven to apply a voltage across the substrate 13 whilst heating the substrate 11. This process embeds metallic ions from the metallic layer within the ion exchange substrate by a process of ion exchange to create an as-diffused product 15 in which the metallic ions are distributed substantially homogeneously across the substrate.

Metalization of the ion exchange substrate 1 is achieved by applying a pulsed laser beam 17 to a surface of the as-diffused substrate such that the energy of the laser causes the conversion of the metal ions in the as-diffused substrate into metal atoms at or near the point at which the laser pulse is incident upon the as-diffused substrate to convert silver ions into silver atoms and form a mixed or percolated metal-dielectric layer.

Metal-dielectric mixtures consisting of metallic inclusions in an insulating matrix present a peculiar optical behavior that allows their use in different applications, both in linear and non-linear optics (diffraction gratings, surface enhanced Raman spectroscopy, second harmonic generation etc.). The optical properties of these composites are mainly dominated by the surface plasmon resonance of the free electrons of the inclusions and the effects of the percolation among inclusions. Thus, the optical behavior of these mixtures may depend on a large number of parameters, like the size, shape and distribution of the metallic inclusions, the interaction among them and the nature of the dielectric matrix. A widely used approach for modeling the optical properties consists of using effective optical constants for the composite, calculated in terms of the optical constants of the mixing materials (effective medium approximations).

When metallic nanoparticles are contained in, for example, a glass matrix the material is known as a glass with embedded metallic nanoparticles or a metal-glass nanocomposite. But if we have a mixture of metallic atoms in a substrate for example, silver with glass is created with a layered structure then this is known as a percolated layer of glass and silver.

In one example of the creation of the as-diffused material in accordance with the present invention a substrate Schott B270 super-white soda-lime glass of 1mm thickness weighing 2.6026 g. One side of the glass (a circular area with a diameter of 18 mm) has a coating of a fast drying silver suspension (Agar 301: very fine silver flakes dispersed in isopropanol).

Step I of fabrication:

The sample is annealed at 300 °C for -30 minutes. The substrate comprises a coated silver layer formed a homogeneous stable solid film of beige colour and with a thickness of $\sim$15$\mu$m which is annealed to form the ion exchange substrate. After coating and annealing, the weight of the sample had increased by 29.1 mg. The thickness and weight increase after annealing indicated the formation of silver oxide ($Ag_2O$ with density of 7.14 $g/cm^3$).

Step II of fabrication:

The sample is then pressed between two metal electrodes which in this example are circular in shape and with a diameter of 18 mm. In order to improve the contact a piece of graphite foil was inserted between the glass and the negative electrode. This has also the advantage that the substances coming out of the glass do not pollute the electrodes. Also graphite forms a non-blocking cathode since it accepts alkali ions. The electrodes with the samples are placed inside an oven and connected to a high-voltage power supply, with the positive voltage connected to the Ag side.

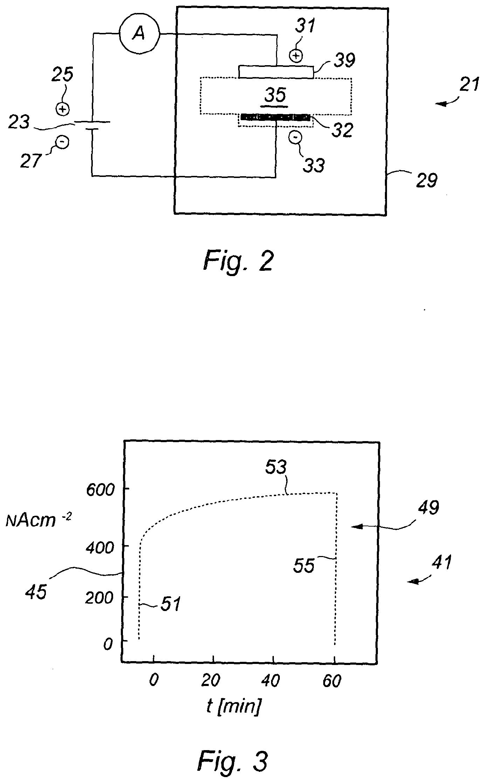

Figure 2 shows the apparatus used for field-assisted diffusion apparatus. The apparatus 21 comprises an electrical circuit 23 with a positive terminal 25 and a negative terminal 27. The circuit extends into an oven 29 where a glass substrate 35 is arranged between the positive electrode 31 and the negative electrode 33. The surface of the ion exchange glass substrate 35 adjoining the positive electrode 31 has a surface layer of silver ions 39. A layer of graphite foil 32 is situated upon the - negative electrode. In order to create an as-diffused substrate, field assisted diffusion used by applying a voltage of 1 kV across the sample for approximately one hour at an oven temperature of approximately 300°C.

The foil 32 is positioned between the glass and the negative electrode and acts to receive ions which are moving out of the glass preventing them from polluting the electrodes. In addition the layer is highly planar and malleable such that it fills voids which would otherwise exist between the relatively uneven surface of the glass substrate and the electrode. This assists in drawing the Na ions from the glass substrate at a more even rate across the surface of the substrate which in turn improves the homogeneity of the ion exchange process such that Ag ions are drawn into the glass in a substantially homogeneous manner. Other materials with similar functional properties such as graphene may be used for a similar purpose

Figure 3 is a graph 41 which plots current per unit area 45 as a function of time 43 during the field-assisted diffusion process. As can be seen, the curve 49 is in three distinct sections. The first part of the curve 51 shows a rapid rise in current to $\sim$420$\mu$ A/cm$^2$. The second part of the curve 53 shows a more gradual rise to a maximum value of $\sim$600 $\mu$A/cm$^2$. The third part of the curve 55 shows a rapid fall in current. Integrating the current over time gives the total charge transfer of -2.01 A.s/cm$^2$.

In Step II of the fabrication the current is ionic and is caused by the silver ions moving into the glass from the anode and alkali and alkaline ions moving out of the glass at the cathode. The current-time dynamics described in the present invention is in contrast to the previous works where Step I, namely annealing of the silver film in air before field-assisted diffusion, has not been performed. This led to the observation in figure 3 of a sharp rise in current in a few minutes followed by slow decrease. These observations may be attributed to the higher rate of the oxidizing reaction of silver on the anode at the beginning of the process to that of the migration rate of silver ions into the substrate.

It has been suggested earlier that the amounts of metallic ions penetrating into the glass matrix depend on the applied voltage and temperature. This allows control of the doping process. Here, the current after an hour became nearly constant. For the purpose of this embodiment of the present invention, after an hour the voltage was disconnected and the residual silver film was removed from the anode surface. The sample was transparent. Transmission spectra of the original glass sample and of the as-diffused sample indicate that after Step II the silver is predominantly in ionic state.

The field-assisted diffusion process may be understood as an electro-chemical process in a solid-state cell. At the applied temperature (300 °C) the cations in the glass, mainly Na$^+$, K$^+$, Ca$^{2+}$, become mobile (sodium is particularly known to be mobile at elevated temperatures. The applied direct current (dc) electric field leads to an ionic current flow and depletion of alkali and alkaline ions under the anode. This results in a space-charge region with a strong electric field, which drives silver into the glass. Here, the oxidized silver film under anode acts as a source for silver ions. Cations are moving towards the cathode where they are neutralized, leaving negative voids near the anode. This paves the way for silver ions (Ag$^+$) to start migrating into the glass matrix and fill the voids left by the alkali ions. For instance and in the case of sodium, it is known that the covalent character of Ag-O bond is higher than that of Na-O bond. Therefore, the force constant for Ag-O is higher. This causes the force constant for Si-O to be lower for Ag-Si-O NBO (non-bridging oxygen) than for Na-Si-O NBO.

The amount of cations in the glass matrix is limited and they will deplete after a period. Close to the anode a large part of the current is carried by silver anions. The total charge transfer of 2.01 A.s/cm$^2$ is equivalent to the charge of 2.24 mg/cm$^2$ of Ag$^+$ ions. After the diffusion process, the residual silver film is mechanically removed from the surface.

Step III of fabrication is a step included where the end point of the process is to create large sized silver nanoparticles within the substrate by applying heat. The as-diffused sample is annealed in air at 550 °C for 48 hours. Post annealing of the sample in air for 48 hours and at 550 °C provides a change of colour of the treated area. Therefore, as a result of the post-annealing process silver ions (Ag$^+$) are further reduced to silver atoms (Ag$^0$), which then in turn form silver nanoparticles with larger sizes. For annealing in air and given the considerable coloration observed the electrons required for silver reduction may be extracted from atoms that are intrinsic to the glass, namely non bridging oxygen (NBO) atoms.

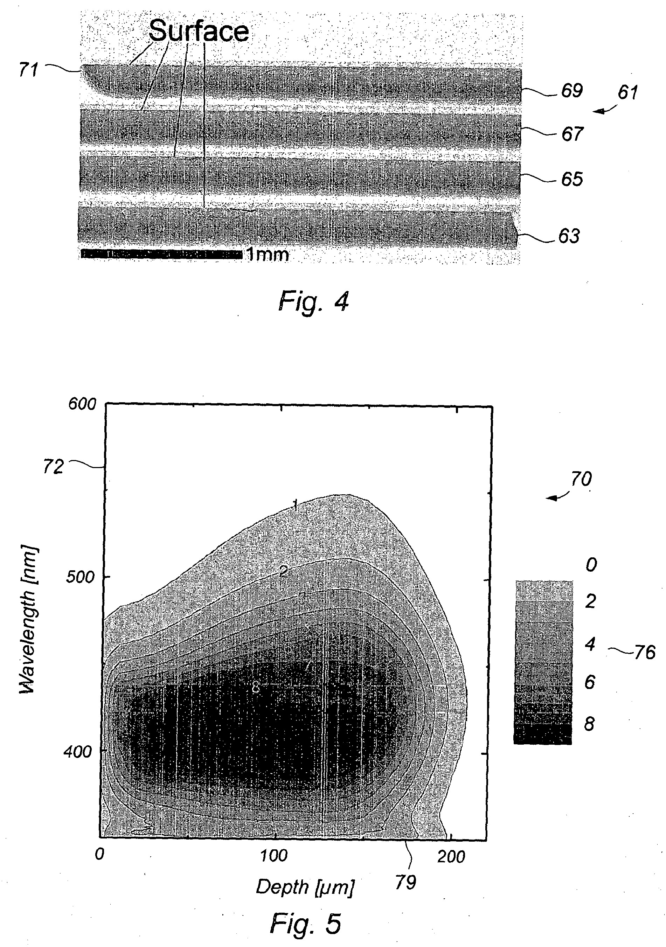

Making a thin slice of the sample and examining the profile of the nanoparticle containing layer provides the means for further optical analysis. Figure 4 shows the cross section of the nanoparticle containing layer 61, distributed over four lines 63, 65, 67, 69. The thickness of the nanoparticle-containing layer is $\sim$230 $\mu$m, and as it can be seen the nanoparticles-containing layer is homogenously distributed throughout the sample. Only at the border 71 (located in the top left corner of the slice) is the profile slightly disturbed due to the edge effects. This is where one of the edges of the electrode was placed.

Figure 5 is a graph 70 which plots wavelength in nanometers 72 against depth in microns, 74. shows the absorbance spectra taken from different depths of the thin slice using the microscope spectrophotometer with a rectangular diaphragm of 10$\mu$m $\times$ 100$\mu$m. The spectra were taken every 10 $\mu$m across the cross section (20 spectra in total). The darker contours in Fig. 5 and in key 76 indicate higher absorbance. Each contour line is labelled with an individual value. In all depths shown in this figure there is a plasmon band centred around 410 nm, corresponding to the formation of nanoparticles with diameters ranging from $\sim$6 to 12 nm. The plasmon band is narrower for the area closer to the surface and becomes wider for lower layers. This is attributed to the formation of larger particles with lower number density closer to the surface (due to the higher probability of the reactions 1 and 2 in the near surface layer) and smaller nanoparticles with higher number density in the deeper layers (reduction reaction).

Here, due to the high absorption, the SPR (Surface Plasmon Resonances) band is mostly cut off making it very difficult to register the exact peak position and its small red shift caused by the spill-out effect of the nanoparticles. The spill-out effect of the electrons will lead to the volume-average mean electron density decreasing and consequently peak position red shifting. It is more prominent with decreasing the particle size.

The width of the plasmon band shows the decay time of the coherent motion of the electrons constituting the plasmon upon external excitation. Previously, it has been shown that in the vicinity of an SPR band of silver nanoparticles (due to the small imaginary part of their interband susceptibility), the plasmon band at its FWHM (Full Width Half Maximum) has the same value as the frequency of electron collisions. Therefore, decrease in particle size can result in the increase of the frequency of electron collisions and hence broadening of the plasmon band.

This embodiment of the present invention shows the formation of larger particles with lower number density closer to the surface and smaller nanoparticles with higher number density in the deeper layers. The dc electric field-assisted fabrication of homogenous (island-free) silver-doped nanocomposites glass in air and via a three-step technique was demonstrated which allows for the formation of larger particles with lower number density closer to the surface and smaller nanoparticles with higher number density in the deeper layers.

The amount of ions penetrating into the glass matrix and shape of the diffusion profile is dependent on the process parameters such as applied voltage and temperature. In addition annealing parameters (such as temperature and duration) create the condition for metal-based nanocluster formation.

In another embodiment of the present invention, an as-diffused substrate is created in a process similar to that described above but with certain improved novel features.

Silver ions ($Ag^+$) are introduced into a soda-lime glass by a solid-state field-assisted diffusion process which used an external electric field to assist the migration of the silver ions into the substrate, making it possible to perform ion exchange with even multivalent ions that are driven by the gradient in the electrochemical potential. In this configuration, the metal dopant supplier is a metallic film directly deposited on the glass matrix. This technique prevents interdiffusion between the ionic species as in this case the dopant ions coming from the film replace the alkali ions of the glass substrate matrix.

The process for creating an as-diffused substrate is as follows:

Step 1: One side of a piece of glass was coated with a fast drying silver suspension or paste to create the ion exchange substrate.

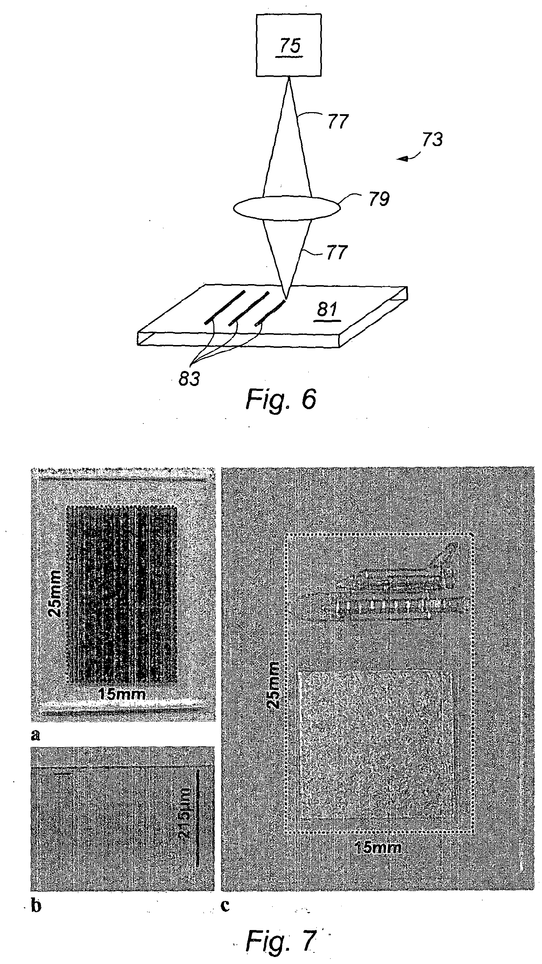

Step 2: The sample was then pressed between two metal electrodes. In order to improve the contact a piece of graphite foil was inserted between the glass and the negative electrode. This has also the advantage that the substances coming out of the glass do not pollute the electrodes. Graphite also formed a non-blocking cathode since it accepts alkali ions. The electrodes with the ion exchange substrate were placed inside an oven and connected to a high-voltage power supply, with the positive voltage connected to the Ag site. The experimental setup for field-assisted diffusion apparatus is shown in Fig. 6. The sample was placed inside the oven at approximately 300 °C (can vary from 100 to 350 °C). A voltage from 10 V to 2 kV can then be applied across the sample for an hour (voltage and duration of the process can be varied depending on the desired parameters for the final sample).

The current-time dynamics of the process were monitored throughout the experiment. After the diffusion process, the residual silver film was mechanically removed from the surface. The as-diffused glass sample then contained silver ions and was transparent. The existence of silver ions in the as-diffused glass can be confirmed by annealing which leads to the formation of silver nanoparticles in the glass matrix.

In another example of the present invention, an as-diffused substrate in accordance with the present invention was metallized using the apparatus shown in figure 6. The apparatus 73 comprises a pulsed laser source 75 which produces a nanosecond pulsed laser output 77. Suitable optics such as a lens 79 is used to focus the beam 77 onto the substrate 81. The laser beam 77 incident on the surface of the substrate 81 causes the formation of metallic silver on or near the surface of the substrate 81. Advantageously, metallization is highly localised to the area on the substrate 81 surface where the laser beam 77 is incident. As can be seen from figure 5, the laser bean 77 has produced a series of three lines 83 of silver metal on or near the surface of the substrate 81.

The as-diffused substrate containing silver ions may be irradiated using a range of pulsed laser systems at various available wavelengths (from 355 nm to 1064 nm) and various values for energy fluence - up to a few J/cm2.

The use of a sufficiently intense and energetic laser source to irradiate the substrate provides a mechanism whereby electrons become available within the substrate for the conversion of $Ag^+$ to $Ag^0$. This release of electrons from the glass matrix and their capture by silver ions constitutes the reduction of silver from ionic state to the metallic state as a result of irradiation. The Silver has been observed to form a glass silver composite or percolated layer of metallic silver on the surface of the glass where the laser irradiation was incident. This allows the creation of this product in a reproducible and scalable manner, making it useful for many applications.

In the embodiment of the present invention, glass was doped with silver ions and silver-doped nanocomposites glasses were created using the above described solid-state field-assisted diffusion process to produce a substantially transparent piece of silver ion doped percolated (SID) glass.

In that process, the combined action of the applied electric field and temperature increased the mobility of alkali metal ions, such as sodium cations ($Na^+$), which are particularly mobile at elevated temperatures. The process leads to an ionic current flow and depletion of alkali ions under the anode resulting in a space-charge region with a strong electric field which makes cations move toward the cathode where they are neutralized. It also leaves negative voids near the anode and paves the way for silver ions to migrate into the glass matrix and fill the voids. The diffusion process is also assisted by the thermal relaxation of the surface tensile stress during the ion exchange process, caused by the size difference between $Ag^+$ (with ionic radius of about 1.26 Å), and $Na^+$ (with ionic radius of about 1.02 Å). This process results in the formation of Ag-Si-O NBO (nonbridging oxygen) in the glass matrix.

Annealing of the substrate at 550 °C for 48 hours resulted in a strong change of colour in the material due to the formation of embedded spherical silver nanoparticles as is shown in Fig. 7a. A thin slice of the sample, showing its cross section and the thickness of the nanoparticles-containing layer, is presented in Fig. 7b.

Therefore the annealing process results in the silver ions ($Ag^+$) being further diffused into the glass matrix and being reduced to silver atoms ($Ag^0$), which then in turn formed silver nanoparticles with larger sizes. The electrons required for silver reduction are extracted from the non-bridging oxygen (NBO) atoms that are intrinsic to the glass.

The concentration of silver ions in the substrate and its temperature due to the annealing process play a fundamental role in the formation and aggregation of silver atoms. During this process, more Ag-O bonds are broken to form neutral silver atoms that become the dominant state. The development of appreciable colour (as can be seen in Fig. 1a) occurs only after aggregation of Ag atoms and formation of nanoclusters much larger than 1 nm.

Metal particles exhibit different optical properties compared to bulk metals making dielectrics mixed with noble metal particles the subject of intensive research efforts across the globe. When a metal particle is smaller than the wavelength of light, the light reflected from it is replaced by light scattering, which is particularly strong at the resonance frequencies of its collective electron excitations-surface plasmon resonances (SPRs). Therefore, the present invention provides a way of controlling the size of the nanoclusters by controlling the extent to which the SID sample is annealed when the SID is created with a substantially homogeneous distribution of silver ions using the above described process.

In the following embodiment a SID sample was cut into five pieces, and the pieces were annealed in air at 550°C, each for a different duration as follows: 1h, 2h, 4h, 8h, 48h. This resulted in the formation of silver nanoparticles inside the glass, changing the colour of the glass to dark yellow for short annealing times and brown for longer times. The glass substrate used here (B270) is known to have a very low concentration of Iron, which is often considered as a reducing agent for silver during annealing process. Thin slices of the cross sections allowed visualization of their depth profile. The resin cures at room temperature. Each section has been polished on both sides and providing slide thicknesses in the range of 30 - 33 μm.

Figure 2(a) shows microscope images of the thin slices. These are the cross sections of the generated silver nanoparticle-containing layers. Figure 2(b) presents the absorbance profiles measured on these thin slices. These graphs show how the plasmon band changes in the depth of the glass with longer annealing times. For 1h annealing the plasmon band at the surface is centred at about 430 nm. In the lower layers the plasmon band becomes much wider, similar to the simulated plasmon bands for very small nanoparticles. In the deeper layers of the glass the absorbance decreases. Both effects are caused by a low amount of silver located in nanoparticles in these regions. It has to be pointed out that the maximum absorbance could only be measured correctly for the deepest layers with lower particle concentrations (since it was too high for most of the glass due to the very high volume filling factor of the NPs in these regions).

Therefore the exact plasmon band position and height could not be determined, however what has been measured allowed us to make the following conclusions. For longer annealing times the silver spreads out into deeper layers, the nanoparticle containing layer becomes thicker. Near the surface the plasmon band becomes narrower, which fits to the simulated spectra for growing particle sizes. This can either happen by the agglomeration of more silver or by Ostwald ripening (K. Yata and T. Yamaguchi, "Ostwald ripening of silver in glass," J. Mater. Sci. 27, 101-106 (1992). In this process smaller NPs are dissolved and redeposited onto larger NPs. In the depths where the shorter-annealed samples have wide plasmon band, the width decreases strongly. The plasmon bandwidth at the lowest edge of the profile is slightly lower for longer annealing times. This means that NPs already

A further SID glass sample was irradiated using the third harmonic of a pulsed Nd:YVO$_4$ laser operating at λ = 355 nm. Laser processing of the SID glass in air results in a space selective, one-step precipitation of silver particles, leading to the formation of a homogeneously scalable glass-silver composite (GSC). The laser was utilized at an output energy density (laser fluence) of 420 mJ cm$^{-2}$ per pulse with a repetition frequency of 80 kHz and pulse duration of 8 ns.

Figure 7c presents an image of the fabricated GSC material, produced by laser irradiation of the SID glass at the laser scanning speed of 14 mms-1. At this scanning speed, approximately 330 pulses per spot were fired into the SID glass. The laser provided a beam with Gaussian intensity profile of an excellent quality (beam quality factor of $M^2 \approx 1.1$) focused to a spot of d = 60 $\mu$m in diameter (1/e$^2$ of the central value) on the sample surface leading to the Rayleigh range

$$R = \frac{\pi d^2}{4M^2\lambda}$$

of approximately R $\approx$ 7.2 mm. This large Rayleigh range (the distance from the beam waist of diameter d to the position where it is $\sqrt{2}d$) provides a uniform irradiation trace throughout the experiments. The laser beam was focused using a flat-field scanning lens system, a specialized lens system in which the focal plane of the deflected laser beam is a flat surface which offsets the off-axis deflection of the beam through the focusing lens system. This ensured a precise energy input and a uniform irradiation trace throughout the process.

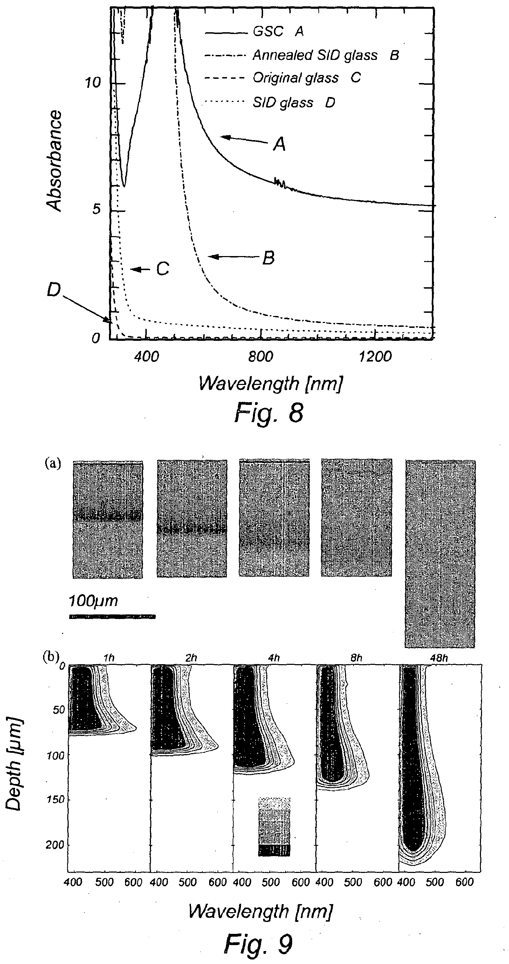

Figure 8 is a graph of absorbance vs wavelength created by measuring the transmitted light. Curve A shows the absorbance of the GSC. Curve A shows a strong absorbance of about 5.2 over the whole spectral range, which is caused by silver-covered areas. This matches a transmission of 0.6 %, which is caused by the less-densely covered areas between the laser-written lines. The surface plasmon resonance (SPR) of silver nanoparticles causes an absorption band around 470 nm due to the formation of large particles in this process.

The SPR band of the GSC is shown in Fig. 8 (curve A), has a peak absorption located at =470 nm. This indicates the homogeneous formation of much larger spherical silver inclusions as compared to the annealing process. *Curve B* shows the absorbance vs wavelength for annealed SID glass. This resulted in the formation of silver nanoparticles with a plasmon band centred at 405 nm due to the formation of small particles. Curve D shows absorbance Vs wavelength for the original glass before ion-exchange at less than 300 nm. Curve C The SID glass has a small additional absorbance over the whole measured spectral range and a considerable absorption at 350 nm. The optical characterizations were performed using a JASCO V-670 UV/VIS/NIR Spectrophotometer and a KEYENCE Digital Microscope VHX-1000

The SID glass absorbs approximately 65 % of the laser light. This is indicated by Fig. 2 (Curve C), showing an increase and red shift in the absorption of the SID glass as compared to the original glass, shown in Fig. 2 (curve D). Therefore, the interaction between the laser beam and SID glass is thermal. The Ag-Si-O NBO atoms absorb the laser light. Absorption of the laser beam and intense irradiation allowed the vast majority of silver ions at or near the incident laser beam to be able to acquire sufficient energy to reduce to silver atoms, leading to the start of the silver aggregation process. The electron gas of the aggregated particles then further absorbs the light pulses leading to the fabrication of metallic silver. In the earliest moment of irradiation, there exist a large discrepancy between electron and lattice temperatures and before thermal equilibrium can be achieved. This process leads to a phase change mechanism resulting in the formation of metallic silver and fabrication of GSC.

As can be seen in Fig. 7c, the as diffused substrate (SID) will have areas of its surface selectively converted into silver metal through the application of highly localised thermal energy from a laser. This can allow the laser to create metal surface patterns on the as-diffused substrate.

In conclusion, in one aspect, the present invention provides a laser-assisted, fast technique for a one-step precipitation of silver from ionic state to metallic state in glass and spatially selective fabrication of a homogeneously structured composite material: glass-silver composite. The optical and structural properties of such composite material can be designed at will, which could have potential impact on light/plasmon wave and sensing technologies, optoelectronics, and surface enhanced Raman spectroscopy. The structural properties of the material are designed by the parameters of the laser, e.g., laser fluence and the irradiated number of pulses per spot. These properties, that are now subject of our further studies, will facilitate the application of GSC in some areas of optoelectronics and chemistry such as light and plasmon wave technology, circuitry, sensing technology, and surface enhanced Raman spectroscopy.

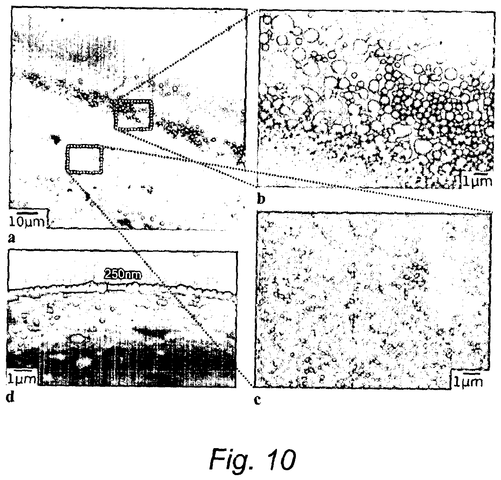

The elementary composition and scanning electron microscopy of the GSC is shown in Fig. 10. Silver inclusions with a size of 200 to 300 nm have been formed in the central part of the laser written lines, while the periphery of the beam led to the formation of fewer but much larger inclusions of up to 800 nm in diameter. The inclusions are formed on the surface of the sample. The GSC was coated with a carbon layer of a few nanometers to prevent charge buildup. (**a**) Top view of the surface. The laser-written line is shown as a large brighter area going down from left to the right under an angle of 20°. (**b** and **c**) Show an image zoomed into that area. At this scale silver nanoparticles with a size of 200 to 300 nm become visible. The area between the laser-written lines contains fewer, but larger particles. A zoomed-in image is shown in (**b**). The size of the particles increases up to 800 nm. (**d**) A view of the cross section of a written line, showing the thickness of the surface layer of about 250 nm

Advantageously, the speed of the processing (laser processing of as-diffused glass) can be as high as a few tens of mm per second. Whilst the formation of nanoparticles (metallic chains) as a result of either laser or even X-ray irradiation and subsequent annealing has been reported, the metallization a substrate in a one step laser assisted process was a wholly unexpected effect and is novel. This process leads to a controllable formation of percolated metallic films with tailored properties in terms of volume filling factor etc., which will then in turn affect the optical and electronic properties of the composite material.

It is noted that, as distinct from the prior art, the present invention provides an area of homogenous silver-ion doped (SID) glass where the homogeneity extends across the whole sample which has been processed in accordance with the present invention. It also provides for the creation of homogenous (island-free) glass containing silver nanoparticles and for the irradiation of a processed sample with a laser leading to the fabrication of homogenous glass-silver composite (metallized area on the glass surface) samples.

It is further noted that the skilled person applying laser irradiation to an ion exchange material would expect to see a gradual change from colourless to yellow to amber to white as reported by blondeau (Journal of Crystal Growth 311(2008) 172-184. IN contrast, the present invention provides a substrate upon which a metal layer is created at or in close proximity to the position upon the substrate at which the laser beam is incident. The optical absorption properties of the substrate and the final metalised material are different from those shown in the prior art as dempnstrated in the above mentioned figures.

The present invention may find application in Technical Marking, Biomedical Applications, Sensors, Embedded Circuits (Optoelectronic circulates and light wave technology), Electro-Optic Materials with tailored nonlinearity, Stimulated Enhanced Raman Scattering (SERS) spectroscopy & related applications (nonlinear optics), and the creation of objects with an aesthetic silver layer.

Improvements and modifications may be incorporated herein without deviating from the scope of the invention.

## Claims

1. A method for metalizing a substrate, the method comprising the steps of:
   creating an as-diffused substrate which is suitable for metalization by:

   heating and applying a voltage across an ion exchange substrate to embed metallic ions from a metallic layer within the ion exchange substrate by a process of ion exchange to create an as-diffused substrate in which the metallic ions are distributed homogeneously across the substrate; and
   metalizing the as-diffused substrate by:
   applying a pulsed laser beam to a surface of the as-diffused substrate at or near a concentration of metallic ions such that the energy of the laser causes the conversion of the metallic ions in the as-diffused substrate into metal atoms at or near the point at which the laser pulse is incident upon the as-diffused substrate thereby creating a metalized substrate with a surface pattern defined by the movement of the laser beam across the surface of the as-diffused substrate.

2. A method as claimed in claim 1 which further comprises creating the ion exchange substrate by annealing a substrate having a suitable concentration of alkali ions and a metallic layer on a surface thereof.

3. A method as claimed in claim 1 wherein, the metal atoms are contained in a mixed or percolated metal-dielectric layer.

4. A method as claimed in claim 2 wherein, the step of annealing occurs at between 250°C and 350°C.

5. A method as claimed in any preceding claim wherein, the step of heating the ion exchange substrate occurs at a temperature of between 100 °C and 350 °C.

6. A method as claimed in any preceding claim wherein, the applied voltage is between 10V and 2 kV.

7. A method as claimed in any preceding claim wherein, the process further comprises introducing a conducting layer between the negative electrode and the substrate to improve the electrical contact between them.

8. A method as claimed in any preceding claim wherein, the process further comprises introducing a receiving layer which captures ion exchange material removed from the substrate during the ion exchange process.

9. A method as claimed in claim 7 wherein the conducting layer is highly planar and malleable such that it fills voids which would otherwise exist between the relatively uneven surface of the glass substrate and the electrode.

10. A method as claimed in claims 7 and 8 wherein, the conducting layer and the receiving layer comprise a graphite layer.

11. A method as claimed in any preceding claim wherein, the substrate comprises a soda lime glass.

12. A method as claimed in any preceding claim wherein,, the metallic layer comprises ions of silver.

13. A method as claimed in any preceding claim wherein, the pulsed laser is a nanosecond or picosecond pulse laser.

14. A method as claimed in claim 13 wherein, the pulsed laser operates at wavelengths from 355 nm to 1064 nm.

15. A method as claimed in claim 13 or claim 14 wherein, the pulsed laser has an energy fluence up to a 5 J/cm$^2$.

**Patentansprüche**

1. Verfahren zum Metallisieren eines Substrats, wobei das Verfahren die folgenden Schritte umfasst: Erzeugen eines wie diffundierten Substrats, das für die Metallisierung geeignet ist, durch:

Erhitzen und Anlegen einer Spannung über einem Ionenaustauschsubstrat, um Metallionen aus einer Metallschicht mittels eines Ionenaustauschprozesses in dem Ionenaustauschsubstrat einzubetten, um ein wie diffundiertes Substrat zu erzeugen, in dem die Metallionen homogen über dem Substrat verteilt sind; und Metallisieren des wie diffundierten Substrats durch:
Anwenden eines gepulsten Laserstrahls auf eine Oberfläche des wie diffundierten Substrats bei oder nahe einer Konzentration von Metallionen, sodass die Energie des Lasers die Umwandlung der Metallionen in dem wie diffundierten Substrat in Metallatome bei oder nahe dem Punkt, an dem der Laserimpuls auf das wie diffundierte Substrat auftrifft, bewirkt, wodurch ein metallisiertes Substrat mit einem Oberflächenmuster erzeugt wird, das durch die Bewegung des Laserstrahls über die Oberfläche des wie diffundierten Substrats definiert ist.

2. Verfahren nach Anspruch 1, das ferner das Erzeugen des Ionenaustauschsubstrats durch Tempern eines Substrats mit einer geeigneten Konzentration an Alkaliionen und einer Metallschicht auf einer Oberfläche davon umfasst.

3. Verfahren nach Anspruch 1, wobei die Metallatome in einer gemischten oder gefilterten Metall-Dielektrikum-Schicht enthalten sind.

4. Verfahren nach Anspruch 2, wobei der Schritt des Temperns zwischen 250 °C und 350 °C erfolgt.

5. Verfahren nach einem der vorhergehenden Ansprüche, wobei der Schritt des Erhitzens des Ionenaustauschsubstrats bei einer Temperatur zwischen 100 °C und 350 °C erfolgt.

6. Verfahren nach einem der vorhergehenden Ansprüche, wobei die angelegte Spannung zwischen 10 V und 2 kV beträgt.

7. Verfahren nach einem der vorhergehenden Ansprüche, wobei der Prozess ferner das Einführen einer leitenden Schicht zwischen die negative Elektrode und das Substrat umfasst, um den elektrischen Kontakt zwischen diesen zu verbessern.

8. Verfahren nach einem der vorhergehenden Ansprüche, wobei der Prozess ferner das Einführen einer Empfangsschicht umfasst, die Ionenaustauschmaterial einfängt, das während des Ionenaustauschprozesses aus dem Substrat entfernt wurde.

9. Verfahren nach Anspruch 7, wobei die leitende Schicht hochgradig eben und verformbar ist, sodass sie Hohlräume füllt, die ansonsten zwischen der relativ unebenen Oberfläche des Glassubstrats und der Elektrode existieren würden.

10. Verfahren nach Ansprüche 7 und 8, wobei die leitende Schicht und die Empfangsschicht eine Graphitschicht umfassen.

11. Verfahren nach einem der vorhergehenden Ansprüche, wobei das Substrat ein Kalknatronglas umfasst.

12. Verfahren nach einem der vorhergehenden Ansprüche, wobei die Metallschicht Silberionen umfasst.

13. Verfahren nach einem der vorhergehenden Ansprüche, wobei der gepulste Laser ein Nanosekunden- oder Pikosekunden-Pulslaser ist.

14. Verfahren nach Anspruch 13, wobei der gepulste Laser bei Wellenlängen von 355 nm bis 1064 nm arbeitet.

15. Verfahren nach Anspruch 13 oder Anspruch 14, wobei der gepulste Laser eine Energiefluenz von bis zu 5 J/cm$^2$ aufweist.

**Revendications**

1. Un procédé pour métalliser un substrat, le procédé comprenant les étapes consistant à :
créer un substrat ainsi obtenu par diffusion qui est approprié pour une métallisation par :

chauffage et application d'une tension de part et d'autre d'un substrat d'échange d'ions pour incorporer des ions métalliques provenant d'une couche métallique à l'intérieur du substrat d'échange d'ions par un processus d'échange d'ions afin de créer un substrat ainsi obtenu par diffusion dans lequel les ions métalliques sont répartis de façon homogène de part et d'autre du substrat ; et

métalliser le substrat ainsi obtenu par diffusion par :

application d'un faisceau laser pulsé à une surface du substrat ainsi obtenu par diffusion au niveau ou à proximité d'une concentration d'ions métalliques de telle sorte que l'énergie du laser provoque la conversion des ions métalliques dans le substrat ainsi obtenu par diffusion en atomes de métal au niveau ou à proximité du point auquel l'impulsion laser est incidente sur le substrat ainsi obtenu par diffusion, créant ainsi un substrat métallisé avec un motif de surface défini par le déplacement du faisceau laser de part et d'autre de la surface du substrat ainsi obtenu par diffusion.

2. Un procédé tel que revendiqué dans la revendication 1 qui comprend en outre la création du substrat d'échange d'ions par recuit d'un substrat ayant une concentration appropriée d'ions alcalins et une couche métallique sur une surface de celui-ci.

3. Un procédé tel que revendiqué dans la revendication 1, où les atomes de métal sont contenus dans une couche métallique-diélectrique mixte ou percolée.

4. Un procédé tel que revendiqué dans la revendication 2, où l'étape consistant à recuire se produit à entre 250 °C et 350 °C.

5. Un procédé tel que revendiqué dans n'importe quelle revendication précédente, où l'étape consistant à chauffer le substrat d'échange d'ions se produit à une température comprise entre 100 °C et 350 °C.

6. Un procédé tel que revendiqué dans n'importe quelle revendication précédente, où la tension appliquée est comprise entre 10 V et 2 kV.

7. Un procédé tel que revendiqué dans n'importe quelle revendication précédente, où le processus comprend en outre l'introduction d'une couche conductrice entre l'électrode négative et le substrat pour améliorer le contact électrique entre eux.

8. Un procédé tel que revendiqué dans n'importe quelle revendication précédente, où le processus comprend en outre l'introduction d'une couche de réception qui capture un matériau d'échange d'ions retiré du substrat pendant le processus d'échange d'ions.

9. Un procédé tel que revendiqué dans la revendication 7 où la couche conductrice est hautement plane et malléable de telle sorte qu'elle remplit des vides qui autrement existeraient entre la surface relativement irrégulière du substrat en verre et l'électrode.

10. Un procédé tel que revendiqué dans les revendications 7 et 8, où la couche conductrice et la couche de réception comprennent une couche de graphite.

11. Un procédé tel que revendiqué dans n'importe quelle revendication précédente, où le substrat comprend un verre sodocalcique.

12. Un procédé tel que revendiqué dans n'importe quelle revendication précédente, où la couche métallique comprend des ions d'argent.

13. Un procédé tel que revendiqué dans n'importe quelle revendication précédente, où le laser pulsé est un laser pulsé nanoseconde ou picoseconde.

14. Un procédé tel que revendiqué dans la revendication 13, où le laser pulsé fonctionne à des longueurs d'onde allant de 355 nm à 1 064 nm.

15. Un procédé tel que revendiqué dans la revendication 13 ou la revendication 14, où le laser pulsé a une fluence énergétique pouvant aller jusqu'à 5 J/cm$^2$.

Fig. 1

Fig. 2

Fig. 3

*Fig. 4*

*Fig. 5*

**Fig. 6**

**Fig. 7**

Fig. 8

Fig. 9

*Fig. 10*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 105136541 A
- US 6596966 B1

- DE 19841547 A1

**Non-patent literature cited in the description**

- **Y. MA et al.** Preparation of Ag nanocrystals embedded silicate glass by field-assisted diffusion and its properties of optical absorption. *Solid State Sci.,* 2010, vol. 12 (8), 1413-1418
- **J. SANCHO-PARRAMON et al.** Optical and structural properties of silver nanoparticles in glass matrix formed by thermal annealing of field assisted film dissolution. *Opt. Mater.,* 2010, vol. 32 (4), 510-514
- **BLONDEAU et al.** Influence of Pulsed Laser Irradiation on Precipitation of Silver Nanoparticles in Glass. *Journal of Crystal Growth,* 2008, vol. 311, 172-184

- **STEFAN WACKEROW et al.** Homogenous silver-doped nanocomposite glass. *OPTICAL MATERIALS EXPRESS,* 12 October 2011, vol. 1 (7), 1224-1231
- **K. YATA ; T. YAMAGUCHI.** Ostwald ripening of silver in glass. *J. Mater. Sci.,* 1992, vol. 27, 101-106
- *Journal of Crystal Growth,* 2008, vol. 311, 172-184